(19) **Europäisches Patentamt / European Patent Office / Office européen des brevets**

(11) **EP 4 637 214 A1**

(12) **EUROPEAN PATENT APPLICATION**
published in accordance with Art. 153(4) EPC

(43) Date of publication:
22.10.2025 Bulletin 2025/43

(21) Application number: 23922197.1

(22) Date of filing: 19.05.2023

(51) International Patent Classification (IPC):
$H04W\ 48/16^{(2009.01)}$    $H04W\ 56/00^{(2009.01)}$

(52) Cooperative Patent Classification (CPC):
Y02D 30/70

(86) International application number:
PCT/CN2023/095334

(87) International publication number:
WO 2024/169069 (22.08.2024 Gazette 2024/34)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.02.2023 CN 202310182538

(71) Applicant: Shenzhen Inovance Technology Co., Ltd.
Shenzhen, Guangdong 518000 (CN)

(72) Inventors:
• SHI, Hui
  Shenzhen, Guangdong 518000 (CN)

• LIU, Qi
  Shenzhen, Guangdong 518000 (CN)
• LI, Changgeng
  Shenzhen, Guangdong 518000 (CN)
• LIN, Zhinan
  Shenzhen, Guangdong 518000 (CN)
• ZHU, Zhijun
  Shenzhen, Guangdong 518000 (CN)
• LI, Xiaoyue
  Shenzhen, Guangdong 518000 (CN)

(74) Representative: Osterhoff, Utz
Bockermann Ksoll
Griepenstroh Osterhoff
Patentanwälte
Bergstraße 159
44791 Bochum (DE)

(54) **WIRELESS-NETWORK ACCESS METHOD, APPARATUS AND SYSTEM, AND STORAGE MEDIUM**

(57) The present application discloses a wireless network access method, an apparatus, a system and a storage medium, including: determining a system coverage radius according to system configuration information issued by a management station; acquiring an access parameter set, a cyclic prefix length, and a guard time interval length according to the system configuration information and the system coverage radius; determining a time domain structure of an uplink synchronization signal according to the access parameter set, the cyclic prefix length, and the guard time interval length; acquiring a unique cyclic shift size corresponding to each terminal station according to a unique identification number of each terminal station; generating an access sequence for each terminal station according to the access parameter set and the unique cyclic shift size; performing subcarrier mapping on the access sequence and converting the access sequence after subcarrier mapping into a sequence time domain signal; truncating a cyclic prefix at the tail of the sequence time domain signal according to the cyclic prefix length; and adding the cyclic prefix to the sequence time domain signal to obtain an uplink synchronization signal with the time domain structure corresponding to each terminal station, so that each terminal station accesses a wireless network according to the corresponding uplink synchronization signal.

EP 4 637 214 A1

determining a system coverage radius according to system configuration information issued by a management station — S10

acquiring an access parameter set, a cyclic prefix length, and a guard time interval length according to the system configuration information and the system coverage radius — S20

determining a time domain structure of an uplink synchronization signal according to the access parameter set, the cyclic prefix length, and the guard time interval length — S30

acquiring a unique cyclic shift size corresponding to each terminal station according to a unique identification number of each terminal station — S40

generating an access sequence for each terminal station according to the access parameter set and the unique cyclic shift size — S50

performing subcarrier mapping on the access sequence and converting the access sequence after subcarrier mapping into a sequence time domain signal — S60

truncating a cyclic prefix at the tail of the sequence time domain signal according to the cyclic prefix length — S70

adding the cyclic prefix to the sequence time domain signal to obtain an uplink synchronization signal with the time domain structure corresponding to each terminal station, so that each terminal station accesses a wireless network according to the corresponding uplink synchronization signal — S80

FIG. 2

## Description

### CROSS-REFERENCE TO RELATED APPLICATIONS

This application claims priority to Chinese Patent Application No. 202310182538.8, filed on February 17, 2023, the entire contents of which are incorporated herein by reference.

### TECHNICAL FIELD

The present application relates to the technical field of communication, and in particular to a wireless network access method, a wireless network access apparatus, a wireless network access system and a storage medium.

### BACKGROUND

With the rapid development of industrial wireless communication technology, the complexity of industrial wireless networks is increasing, and the requirements for complete functions, high efficiency, and security are becoming increasingly stringent. Terminal stations (TS) in industrial scenarios also have high requirements for low latency, high reliability, and multi-access performance. The development trend of intelligent and digital factories has forced traditional industrial networks to develop more rapidly towards smart industries, resulting in huge challenges in the development of wireless network access systems and access methods.

Traditional wireless local area networks (LAN) do not require random access sequences to access the system. All TSs complete system access by sending media access request frames through a carrier sense multi-point access mechanism with conflict avoidance. This method is easy to implement and does not require a separate design on the physical layer. However, various media access request frames not only occupy more orthogonal frequency division multiplexing (OFDM) symbols, but also when the number of users is large, the increase in the probability of conflict will cause the system efficiency to decrease, which has a huge negative impact on the low latency and high reliability performance in industrial networks.

The above content is only to assist in understanding the technical solution of the present application, and it does not mean that the above contents are recognized as related art.

### SUMMARY

The main purpose of the present application is to provide a wireless network access method, an apparatus, a system, and a storage medium, aiming to solve the technical problems of high latency and poor reliability of industrial wireless network access in the related art.

In order to achieve the above purpose, the present application provides a wireless network access method, including the following steps:

determining a system coverage radius according to system configuration information issued by a management station;

acquiring an access parameter set, a cyclic prefix length, and a guard time interval length according to the system configuration information and the system coverage radius;

determining a time domain structure of an uplink synchronization signal according to the access parameter set, the cyclic prefix length, and the guard time interval length;

acquiring a unique cyclic shift size corresponding to each terminal station according to a unique identification number of each terminal station;

generating an access sequence for each terminal station according to the access parameter set and the unique cyclic shift size;

performing subcarrier mapping on the access sequence and converting the access sequence after subcarrier mapping into a sequence time domain signal;

truncating a cyclic prefix at the tail of the sequence time domain signal according to the cyclic prefix length; and

adding the cyclic prefix to the sequence time domain signal to obtain an uplink synchronization signal with the time domain structure corresponding to each terminal station, so that each terminal station accesses a wireless network according to the corresponding uplink synchronization signal.

In an embodiment, before the determining the system coverage radius according to the system configuration information issued by the management station, the method further includes:

calculating a round-trip propagation delay based on each system coverage radius and determining a channel delay spread;

setting the cyclic prefix length of each system coverage radius to be greater than or equal to a sum of the round-trip propagation delay and the channel delay spread corresponding to each system coverage radius; and

setting the guard time interval length corresponding to each system coverage radius to be greater than or equal to the round-trip propagation delay corresponding to each system coverage radius.

In an embodiment, the acquiring the unique cyclic shift size corresponding to each terminal station according to the unique identification number of each terminal station includes:

determining a base cyclic shift size and a sequence length according to the access parameter set; and
determining the unique cyclic shift size corresponding to each terminal station according to the unique identification number of each terminal station, the base cyclic shift size, and the sequence length.

In an embodiment, the access parameter set includes a sequence length and an initial value for generating a sequence, and the generating the access sequence for each terminal station according to the access parameter set and the unique cyclic shift size includes:

generating the access sequence of each terminal station using a sequence generation formula according to the sequence length, the initial value, and the unique cyclic shift size;
where the sequence generation formula is:

$$x_{u,v}(n + v),\ u \in \{1, \ldots, N_{ZC} - 1\},\ n = 0,\ 1,\ \ldots,\ N - 1$$

a modulo $(N - 1)$ operation is performed on $(n + v)$ to ensure $(n + v)$ does not exceed the sequence length, $u$ is the initial value for generating sequence, v is the unique cyclic shift size, $N_{ZC}$ is the sequence length, and $N_{ZC}$ is less than or equal to a total number of subcarriers.

In an embodiment, the access sequence of each terminal station is a ZC sequence, and a sequence length of the ZC sequence includes 239, 113 and 59.

In an embodiment, the time domain structure of the uplink synchronization signal is configured based on the sequence length of the ZC sequence, and the time domain structure is configured as at least one of the following structures: a 1-symbol alignment format time domain structure, a 2-symbol alignment format time domain structure, a preparatory advance format time domain structure, and a CP1 padding format time domain structure.

In an embodiment, the system coverage radius includes a first indoor basic coverage radius, a second indoor basic coverage radius, a first indoor enhanced coverage radius, a second indoor enhanced coverage radius and an outdoor enhanced coverage radius, the first indoor basic coverage radius is less than the second indoor basic coverage radius, the second indoor basic coverage radius is less than the first indoor enhanced coverage radius, the first indoor enhanced coverage radius is less than the second indoor enhanced coverage radius, and the second indoor enhanced coverage radius is less than the outdoor enhanced coverage radius.

In an embodiment, in response to that the system coverage radius is the first indoor basic coverage radius, the time domain structure of the uplink synchronization signal includes a first cyclic prefix length, a sequence length and a first guard time interval length to form one OFDM symbol length.

In an embodiment, in response to that the system coverage radius is the second indoor basic coverage radius, the time domain structure of the uplink synchronization signal includes the first cyclic prefix length, the sequence length, the first guard time interval length and a next symbol CP1 length to form one OFDM symbol length plus the next symbol CP1 length.

In an embodiment, in response to that the system coverage radius is the first indoor enhanced coverage radius, the time domain structure of the uplink synchronization signal includes a second cyclic prefix length, a sequence length and a second guard time interval length to form one OFDM symbol length plus a preparatory amount, the second cyclic prefix length is greater than the first cyclic prefix length, and the second guard time interval length is greater than the first guard time interval length.

In an embodiment, in response to that the system coverage radius is the second indoor enhanced coverage radius, the time domain structure of the uplink synchronization signal includes the second cyclic prefix length, the sequence length, the second guard time interval length and the next symbol CP1 length to form one OFDM symbol length plus the next symbol CP1 length plus a preparatory amount.

In an embodiment, in response to that the system coverage radius is an outdoor enhanced coverage radius, the time domain structure of the uplink synchronization signal includes a third cyclic prefix length, a sequence length and a third guard time interval length to form two OFDM symbol lengths, the third cyclic prefix length is greater than the second cyclic prefix length, and the third guard time interval length is greater than the second guard time interval length.

In an embodiment, in response to that the sequence length of the ZC sequence is 239, the subcarrier mapping mode of the ZC sequence is non-insertion mapping;

in response to that the sequence length of the ZC sequence is 113, the subcarrier mapping method of the ZC sequence is to insert 1 zero mapping; and

in response to that the sequence length of the ZC sequence is 59, the subcarrier mapping method of the ZC sequence is to insert 3 zero mappings.

In order to achieve the above purpose, the present application further provides a wireless network access apparatus, including:

a radius determination module, configured to determine a system coverage radius according to system configuration information issued by a management station;

a first acquisition module, configured to acquire an access parameter set, a cyclic prefix length, and a guard time interval length according to the system configuration information and the system coverage radius;

a structure determination module, configured to determine a time domain structure of an uplink synchronization signal according to the access parameter set, the cyclic prefix length, and the guard time interval length;

a second acquisition module, configured to acquire a unique cyclic shift size corresponding to each terminal station according to a unique identification number of each terminal station;

a generating module, configured to generate an access sequence for each terminal station according to the access parameter set and the unique cyclic shift size;

a subcarrier mapping module, configured to perform subcarrier mapping on the access sequence and converting the access sequence after subcarrier mapping into a sequence time domain signal;

a truncation module, configured to truncate a cyclic prefix at the tail of the sequence time domain signal according to the cyclic prefix length; and

an adding module, configured to the cyclic prefix to the sequence time domain signal to obtain an uplink synchronization signal with the time domain structure corresponding to each terminal station, so that each terminal station accesses a wireless network according to the corresponding uplink synchronization signal.

In order to achieve the above purpose, the present application further provides a wireless network access system, including: a memory, a processor, and a wireless network access program stored in the memory and executable on the processor, when the wireless network access program is executed by the processor, the wireless network access method as described above is implemented.

In order to achieve the above purpose, the present application further provides a storage medium, a wireless network access program is stored on the storage medium, and when the wireless network access program is executed by a processor, the wireless network access method as described above is implemented.

The present application determines the system coverage radius according to the system configuration information issued by the management station; obtains the access parameter set, cyclic prefix length and guard time interval length according to the system configuration information and the system coverage radius; determines the time domain structure of the uplink synchronization signal according to the access parameter set, the cyclic prefix length and the guard time interval length; obtains the unique cyclic shift size corresponding to each terminal station according to the unique identification number of each terminal station; generates the access sequence of each terminal station according to the access parameter set and the unique cyclic shift size; performs subcarrier mapping on the access sequence, and converts the access sequence after subcarrier mapping into a sequence time domain signal; intercepts the cyclic prefix at the tail of the sequence time domain signal according to the cyclic prefix length; adds the cyclic prefix to the sequence time domain signal to obtain the uplink synchronization signal with the time domain structure corresponding to each terminal station, so that each terminal station can access the wireless network according to the corresponding uplink synchronization signal. The system configuration information in this application can be updated according to the specific industrial wireless network access scenario, and the access function of the terminal station in the industrial wireless network is realized through the configurable and updateable parameters, which can uniformly and efficiently manage the terminal stations, reduce the access delay of the industrial wireless network, and improve the reliability, robustness and flexibility of the operation of the wireless access network.

## BRIEF DESCRIPTION OF THE DRAWINGS

FIG. 1 is a schematic diagram of a structure of a wireless network access system in a hardware operating environment involved in an embodiment of the present application.

FIG. 2 is a schematic flowchart of the wireless network access method according to an embodiment of the present application.

FIG. 3 is a schematic flowchart of the wireless network access method according to an embodiment of the present application.

FIG. 4A is a schematic diagram of subcarrier mapping 1 in the wireless network access method according to an embodiment of the present application.

FIG. 4B is a schematic diagram of subcarrier mapping 2 in the wireless network access method according to an embodiment of the present application.

FIG. 4C is a schematic diagram of subcarrier mapping 3 in the wireless network access method according to an embodiment of the present application.

FIG. 5A is a schematic diagram of a time domain SEQ structure corresponding to subcarrier mapping 1 in the wireless network access method according to an embodiment of the present application.

FIG. 5B is a schematic diagram of a time domain SEQ structure corresponding to subcarrier mapping 2 in the wireless network access method according to an embodiment of the present application.

FIG. 5C is a schematic diagram of a time domain SEQ structure corresponding to subcarrier mapping 3 in the wireless network access method according to an embodiment of the present application.

FIG. 6A is a schematic diagram of a time domain structure of a 1-symbol alignment format in the wireless network access method according to an embodiment of the present application.

FIG. 6B is a schematic diagram of a time domain structure of a 2-symbol alignment format in the wireless network access method according to an embodiment of the present application.

FIG. 7 is a schematic diagram of the time domain structure of the preparatory advance format in the wireless network access method according to an embodiment of the present application.

FIG. 8 is a schematic diagram of the time domain structure of the CP1 padding format in the wireless network access method according to an embodiment of the present application.

FIG. 9A is a schematic diagram of a time domain structure of a 2-symbol alignment format when the ZC sequence length is 239 in the wireless network access method according to an embodiment of the present application.

FIG. 9B is a schematic diagram of a time domain structure of a 1-symbol alignment format when the ZC sequence length is 239 in the wireless network access method according to an embodiment of the present application.

FIG. 9C is a schematic diagram of the time domain structure of a 1-symbol alignment format + CP1 padding format when the ZC sequence length is 239 in the wireless network access method according to an embodiment of the present application.

FIG. 9D is a schematic diagram of the time domain structure of the preparatory advance format when the ZC sequence length is 239 in the wireless network access method according to an embodiment of the present application.

FIG. 9E is a schematic diagram of the time domain structure of the preparatory advance format + CP1 padding format when the ZC sequence length is 239 in the wireless network access method according to an embodiment of the present application.

FIG. 10A is a schematic diagram of a time domain structure of a CP filled in a 2-symbol alignment format SEQ1 when the ZC sequence length is 113 in the wireless network access method according to an embodiment of the present application.

FIG. 10B is a schematic diagram of the time domain structure of a 2-symbol alignment format SEQ11 filled with CP plus CP1 when the ZC sequence length is 113 in the wireless network access method according to an embodiment of the present application.

FIG. 10C is a schematic diagram of a time domain structure of a 1-symbol alignment format when the ZC sequence length is 113 in the wireless network access method according to an embodiment of the present application.

FIG. 10D is a schematic diagram of a time domain structure of a 1-symbol alignment format + CP1 padding when the ZC sequence length is 113 in an embodiment of the wireless network access method of the present application.

FIG. 10E is a schematic diagram of a time domain structure of CP padding in 1-symbol alignment format SEQ11 when the ZC sequence length is 113 in the wireless network access method according to an embodiment of the present application.

FIG. 10F is a schematic diagram of a time domain structure of SEQ11 padding CP plus CP1 padding when the ZC sequence length is 113 in a wireless network access method according to an embodiment of the present application.

FIG. 10G is a schematic diagram of the time domain structure of the preparatory advance format when the ZC sequence length is 113 in the wireless network access method according to an embodiment of the present application.

FIG. 10H is a schematic diagram of a time domain structure of a reserve advance format + CP1 padding when the ZC sequence length is 113 in the wireless network access method according to an embodiment of the present application.

FIG. 11A is a schematic diagram of a time domain structure of a 1-symbol alignment format when the ZC sequence length is 59 in the wireless network access method according to an embodiment of the present application.

FIG. 11B is a schematic diagram of a time domain structure of a 1-symbol alignment format + CP1 padding when the ZC sequence length is 59 in the wireless network access method according to an embodiment of the present application.

FIG. 11C is a schematic diagram of a time domain structure of CP padding in symbol alignment format SEQ1 when the ZC sequence length is 59 in the wireless network access method according to an embodiment of the present application.

FIG. 11D is a schematic diagram of a time domain structure of SEQ1 padding CP plus CP1 padding when the ZC sequence length is 59 in a 1-symbol alignment format in the wireless network access method according to an embodiment of the present application.

FIG. 11E is a schematic diagram of the time domain structure of the preparatory advance format when the ZC sequence length is 59 in an embodiment of the wireless network access method of the present application.

FIG. 11F is a schematic diagram of the time domain structure of a reserve advance format + CP1 padding format when the ZC sequence length is 59 in the wireless network access method according to an embodiment of the present application.

FIG. 11G is a schematic diagram of a time domain structure in which a symbol alignment format SEQ1 is filled with CP and SEQ4 is filled with GP when the ZC sequence length is 59 in the wireless network access method according to an embodiment of the present application.

FIG. 11H is a schematic diagram of the time domain structure of a 1-symbol alignment format SEQ1 filled with CP and SEQ4 filled with GP plus CP1 padding format when the ZC sequence length is 59 in the wireless network access method according to an embodiment of the present application.

FIG. 12 is a schematic diagram of the time domain structure of an uplink synchronization signal corresponding to the first indoor basic coverage radius in an embodiment of the wireless network access method of the present application.

FIG. 13 is a schematic diagram of the time domain structure of an uplink synchronization signal corresponding to a second indoor basic coverage radius in the wireless network access method according to an embodiment of the present application.

FIG. 14 is a schematic diagram of the time domain structure of an uplink synchronization signal corresponding to a first indoor enhanced coverage radius in the wireless network access method according to an embodiment of the present application.

FIG. 15 is a schematic diagram of the time domain structure of an uplink synchronization signal corresponding to a second indoor enhanced coverage radius in the wireless network access method according to an embodiment of the present application.

FIG. 16 is a schematic diagram of the time domain structure of an uplink synchronization signal corresponding to an outdoor enhanced coverage radius in the wireless network access method according to an embodiment of the present application.

FIG. 17 is a structural block diagram of a wireless network access apparatus according to an embodiment of the present application.

The realization of the purpose, functional features and advantages of the present application will be further explained in conjunction with the embodiments and with reference to the accompanying drawings.

## DETAILED DESCRIPTION OF THE EMBODIMENTS

It should be understood that the specific embodiments described herein are only to explain the present application and are not to limit the present application.

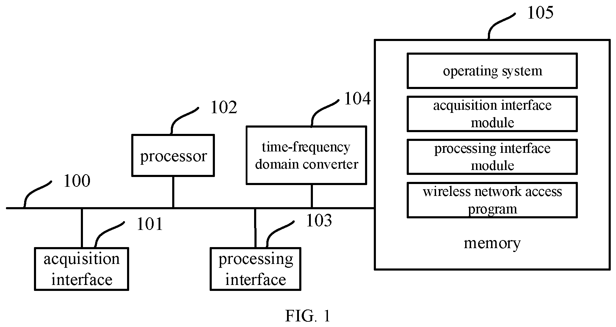

As shown in FIG. 1, FIG. 1 is a schematic diagram of the device structure of hardware operating environment involved in the embodiment of the present application.

The device of the embodiment of the present application can be a servo structure, or can be an electronic terminal device with network communication function such as a PC, a smart phone, a tablet computer, a portable computer, etc.

As shown in FIG. 1, the device may include a processor 1001, such as a CPU, a network interface 1004, a user interface 1003, a memory 1005, and a communication bus 1002. The communication bus 1002 is configured to implement communication between the components. The user interface 1003 may include a display, an input unit such as a keyboard. The user interface 1003 may also include a standard wired interface and a wireless interface. The network interface 1004 may further include a standard wired interface and a wireless interface (such as a wireless-fidelity (Wi-Fi) interface). The memory 1005 may be a high-speed random access memory (RAM) or a non-volatile memory, such as a magnetic disk memory. The memory 1005 may also be a storage device independent of the foregoing processor 1001.

In an embodiment, the device may also include a camera, a Radio Frequency (RF) circuit, a sensor, an audio circuit, a Wi-Fi module, and so on. The sensors may be, for example, a light sensor, a motion sensor, and other sensors. Specifically, the light sensor may include an ambient light sensor and a proximity sensor. The ambient light sensor may adjust the brightness of the display according to the brightness of the ambient light. The proximity sensor may turn off the display and/or the backlight when the mobile terminal is moved to the ear. A gravity acceleration sensor, as a kind of motion sensor, may detect the magnitude of acceleration in various directions (usually three axes). The gravity acceleration sensor may detect the magnitude and direction of gravity when it is stationary, and may be configured to identify the gesture of the mobile terminal (such as horizontal and vertical screen switching, related games, magnetometer attitude calibration), vibration recognition related functions (such as pedometer, tap), etc. The mobile terminal may also be configured with other sensors such as a gyroscope, a barometer, a hygrometer, a thermometer, an infrared sensor, and the like, which will not be repeated here.

Those skilled in the art should understand that the structure shown in FIG. 1 does not constitute a limitation on the device, and may include more or fewer components, a combination of some components, or differently arranged components than shown in the figure.

As shown in FIG. 1, the memory 1005 as a computer storage medium may include an operating system, a network communication module, a user interface module, and a wireless network access program.

In the device shown in FIG. 1, the network interface 1004 is mainly configured to connect to a background server and perform data communication with the background server. The user interface 1003 is mainly configured to connect to a client (user) and perform data communication with the client. The processor 1001 may be configured to call the wireless network access program stored on the memory 1005, and perform the following steps.

As shown in FIG. 1, FIG. 1 a schematic diagram of a structure of a wireless network access system in a hardware operating environment involved in an embodiment of the present application.

As shown in FIG. 1, the wireless network access system may include: a communication bus 100, an acquisition interface 101, a processor 102, such as a central processing unit (CPU), a processing interface 103, a time-frequency domain converter 104, and a memory 105. The communication bus 100 is used to realize the connection and communication between these components. The acquisition interface 101 may include a wireless signal receiving apparatus, an acquisition unit such as a computer, and the acquisition interface 101 may also include a standard wired interface and a wireless interface. The processing interface 103 may include a standard wired interface and a wireless interface. The memory 105 may be a high-speed RAM or a stable non-volatile memory (NVM), such as a disk memory. The memory 105 may also be a storage device independent of the aforementioned processor 102.

As shown in FIG. 1, the memory 105 as a storage medium may include an operating system, an acquisition interface module, a processing interface module and a wireless network access program.

In the wireless access network system shown in FIG. 1, the communication bus 100 is mainly used to realize the connection communication between components; the acquisition interface 101 is mainly used to connect the wireless signal receiving device to realize data communication with the management station (MS) background server; the processing interface 102 is mainly used to connect the terminal station (TS) to communicate data with the TS; the processor 102 and the memory 105 in the wireless access network system of the present application can be set in the wireless access network system, and the wireless access network system calls the wireless network access program stored in the memory 105 through the processor 102, and executes the wireless network access method provided in the embodiment of the present application.

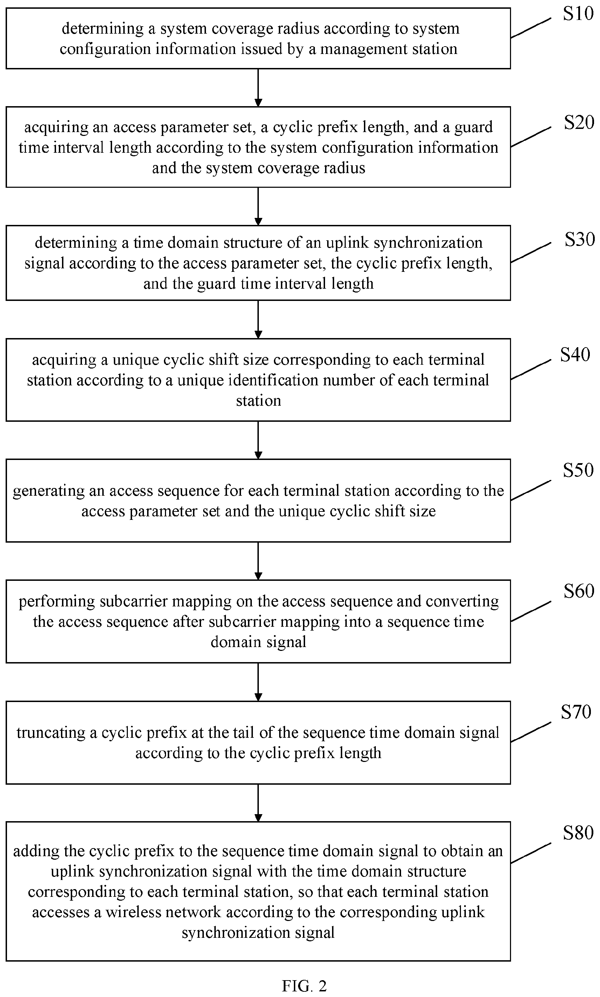

Embodiments of the present application provide a wireless network access method. As shown in FIG. 2, FIG. 2 is a schematic flowchart of the wireless network access method according to an embodiment of the present application.

In this embodiment, the wireless network access method includes the following steps:

Step S10: determining a system coverage radius according to system configuration information issued by a management station.

It should be noted that the execution subject of this embodiment may be a computing service device with data processing, network communication and program running functions, such as a tablet computer, a personal computer, a mobile phone, etc., or an electronic device capable of realizing the above functions, a wireless network access system, etc. The following takes a wireless network access device as an example to illustrate this embodiment and the following embodiments.

It can be understood that the system configuration information can be information for configuring parameters of the wireless network access system; the system coverage radius can be read from the system configuration information, for example, the system coverage radius includes the first indoor basic coverage radius, the second indoor basic coverage radius and the first indoor enhanced coverage radius, etc.

Step S20: acquiring an access parameter set, a cyclic prefix length, and a guard time interval length according to the system configuration information and the system coverage radius.

In this embodiment, a corresponding access parameter set, cyclic prefix length, and guard time interval length may be obtained according to system configuration information. The access parameter set may include a sequence length, an initial value of a base cyclic shift size to generate a sequence, and the like. The cyclic prefix length and the guard time interval length correspond to a system coverage radius. For example, a mapping relationship exists between each system coverage radius and the cyclic prefix length and the guard time interval length. The corresponding cyclic prefix length and the guard time interval length may be obtained through the above mapping relationship according to the system coverage radius determined by the system configuration information. The cyclic prefix may be represented by a Cyclic Prefix (CP), and the guard time interval may be represented by a Guard Period (GP).

Step S30: determining a time domain structure of an uplink synchronization signal according to the access parameter set, the cyclic prefix length, and the guard time interval length.

It is understandable that the uplink synchronization signal can be represented by Uplink Synchronization Signal (USS). If the system coverage radius changes, the time domain structure of the uplink synchronization signal may also change accordingly to adapt to the changed system coverage radius.

Step S40: acquiring a unique cyclic shift size corresponding to each terminal station according to a unique identification number of each terminal station.

It can be understood that the unique identification number can be an identification number that can uniquely distinguish each terminal station, for example, the unique identification number can be a media access address, a physical address or other identification number. The unique cyclic shift size can be a unique cyclic shift size in the network calculated using the unique identification number of the terminal station.

Step S50: generating an access sequence for each terminal station according to the access parameter set and the unique cyclic shift size.

Step S60: performing subcarrier mapping on the access sequence and converting the access sequence after subcarrier mapping into a sequence time domain signal.

It can be understood that the subcarrier mapping methods include: no insertion mapping, sequence insertion of 1 zero mapping and sequence insertion of multiple zero mapping. Specifically, which of the above methods to use for subcarrier mapping can be determined according to the sequence length in the access parameter set.

Step S70: truncating a cyclic prefix at the tail of the sequence time domain signal according to the cyclic prefix length.

Step S80: adding the cyclic prefix to the sequence time domain signal to obtain an uplink synchronization signal with the time domain structure corresponding to each terminal station, so that each terminal station accesses a wireless network according to the corresponding uplink synchronization signal.

In an embodiment, a system coverage radius is determined according to system configuration information sent by a management station, where the system coverage radius includes a first indoor basic coverage radius, a second indoor basic coverage radius, a first indoor enhanced coverage radius, a second indoor enhanced coverage radius, and an outdoor enhanced coverage radius. An access parameter set is determined according to the system configuration information, where the access parameter set includes a sequence length, a base cyclic shift size, and an initial value of a generated sequence. A cyclic prefix length and a guard time interval length corresponding to the system coverage radius are obtained by looking up a table. A time domain structure of an uplink synchronization signal corresponding to the system coverage radius is determined according to the sequence length, the cyclic prefix length, and the guard time interval length. A unique cyclic shift size of each terminal station is calculated according to a unique identification number of each terminal station. An access sequence of each terminal station is generated according to the initial value for generating sequence and the unique cyclic shift size of each terminal station; and the access sequence of each terminal station can be generated according to formula (1):

$$x_{u,v}(n + v), u \in \{1, \ldots, N_{ZC} - 1\}, n = 0, 1, \ldots, N - 1 \quad \text{(Formula 1)}$$

The modulo ($N$ - 1) operation is performed on ($n + v$) to ensure (n + v) does not exceed the sequence length.

In the formula, $u$ is the initial value for generating sequence, $v$ is the unique cyclic shift size, $N$ is the sequence length, and $N$ is less than or equal to a total number of subcarriers.

A mapping method for subcarrier mapping is determined according to the sequence length, and subcarrier mapping is performed on the access sequence of each terminal station through the mapping method. The access sequence after subcarrier mapping is converted into a sequence time domain signal, and the cyclic prefix is intercepted at the end of the sequence timing signal according to the cyclic prefix length, and the cyclic prefix is added to the sequence timing signal to obtain an uplink synchronization signal with the above-mentioned time domain structure. The uplink synchronization signal is subsequently processed and sent to the management station.

Furthermore, in order to make the time domain structure of the uplink synchronization signal match the system coverage radius, before step S10, the method further includes: calculating a round-trip propagation delay based on each system coverage radius and determining a channel delay spread; setting the cyclic prefix length of each system coverage radius to be greater than or equal to a sum of the round-trip propagation delay and the channel delay spread corresponding to each system coverage radius; and setting the guard time interval length corresponding to each system coverage radius to be greater than or equal to the round-trip propagation delay corresponding to each system coverage radius.

In this embodiment, the channel delay spread is measured, and the propagation round-trip delay is calculated based on the coverage radius of each system. The cyclic prefix length of each system coverage radius is set to be greater than or equal to the sum of the corresponding propagation round-trip delay and the channel delay spread. The guard time interval length of each system coverage radius is set to be greater than or equal to the corresponding propagation round-trip delay.

In this embodiment, the system coverage radius is determined according to the system configuration information sent by the management station. The access parameter set, the cyclic prefix length and the guard time interval length are obtained according to the system configuration information and the system coverage radius. The time domain structure of the uplink synchronization signal is determined according to the access parameter set, the cyclic prefix length and the guard time interval length. The unique cyclic shift size corresponding to each terminal station is obtained according to the unique identification number of each terminal station. The access sequence of each terminal station is generated according to the access parameter set and the unique cyclic shift size. The access sequence is subcarrier mapped, and the access sequence after subcarrier mapping is converted into a sequence time domain signal. The cyclic prefix is intercepted at the tail of the sequence time domain signal according to the cyclic prefix length. The cyclic prefix is added to the sequence time domain signal to obtain the uplink synchronization signal with the time domain structure corresponding to each terminal station, so that each terminal station can access the wireless network according to the corresponding uplink synchronization signal. The system configuration information in this embodiment can be updated according to the specific industrial wireless network access scenario, and the access function of the terminal station in the industrial wireless network is realized through the configurable and updateable parameters, which can uniformly and efficiently manage the terminal stations, reduce the access delay of the industrial wireless network, and improve the reliability, robustness and flexibility of the operation of the wireless access network.

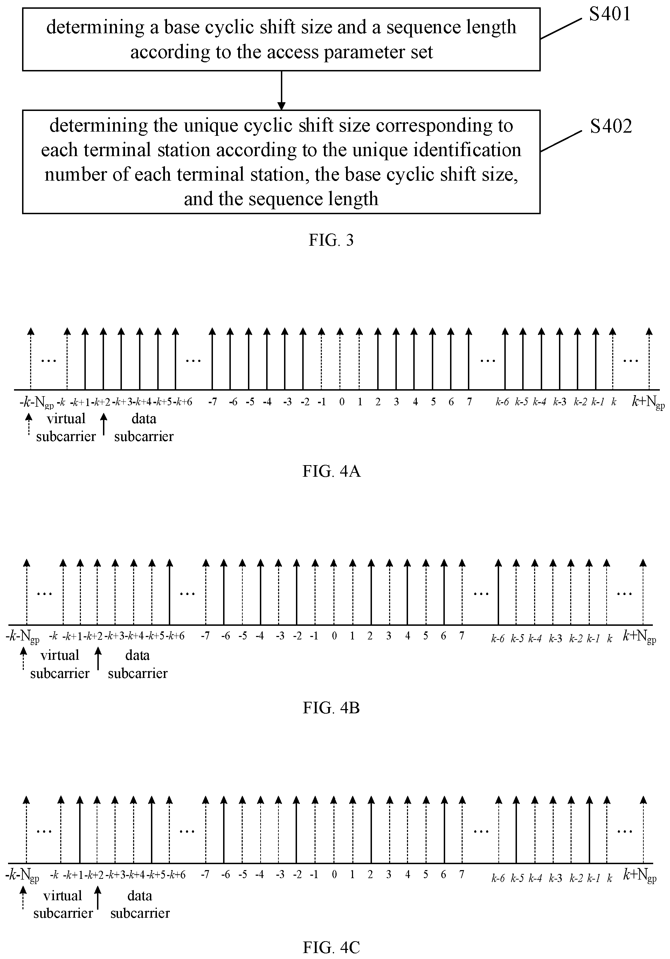

In some embodiments, as shown in FIG. 3, which is schematic flowchart of the wireless network access method according to an embodiment of the present application.

Based on the above embodiment, in this embodiment, step S40 includes:
Step S401: determining a base cyclic shift size and a sequence length according to the access parameter set.

In this embodiment, the base cyclic shift size and the sequence length may be obtained from an access parameter set.

Step S402: determining the unique cyclic shift size corresponding to each terminal station according to the unique identification number of each terminal station, the base cyclic shift size, and the sequence length.

In an embodiment, a base cyclic shift size and a sequence length are obtained from an access parameter set, and a unique cyclic shift size corresponding to each terminal station is calculated by formula (2) according to the base cyclic shift size, the sequence length and the unique cyclic shift size. Formula (2) can be represented by the following formula:

$$v = m \times k \ (\text{Formula 2})$$

In the formula 2, $m = (ID) \bmod \lfloor N_{zc} / k \rfloor$, and $m \in \{1, 2, ..., \lfloor N_{zc} / n \rfloor\}$, $v$ is the unique cyclic shift size, ID is the unique identification number, k is the base cyclic shift size, and $N_{zc}$ is the sequence length.

Furthermore, in order to generate an access sequence for each terminal station, the access parameter set includes a sequence length and an initial value for generating a sequence, and the step S50 includes: generating the access sequence of each terminal station using a sequence generation formula according to the sequence length, the initial value, and the unique cyclic shift size; the sequence generation formula may refer to formula (1).

This embodiment determines the base cyclic shift size and the sequence length according to the access parameter set, and determines the unique cyclic shift size corresponding to each terminal station according to the unique identification number of each terminal station, the base cyclic shift size and the sequence length, thereby improving the flexibility of industrial wireless network access.

In some embodiments, the access sequence of each terminal station is a ZC sequence, and the sequence length of the ZC sequence includes 239, 113 and 59.

Furthermore, in order to improve the flexibility of industrial wireless network access, if the sequence length of the ZC sequence is 239, the subcarrier mapping method for the ZC sequence is no insertion mapping. If the sequence length of the ZC sequence is 113, the subcarrier mapping method for the ZC sequence is to insert 1 zero mapping. If the sequence length of the ZC sequence is 59, the subcarrier mapping method for the ZC sequence is to insert 3 zero mappings.

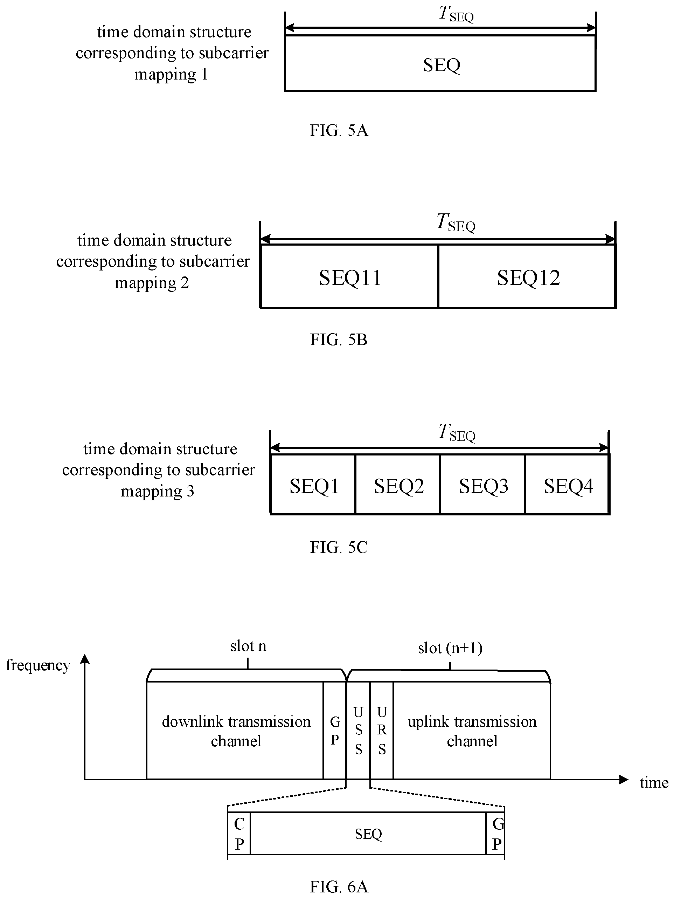

In an embodiment, the subcarrier mapping method for the ZC sequence includes: subcarrier mapping 1-no insertion mapping, subcarrier mapping 2-insertion of 1 zero mapping and subcarrier mapping 3-insertion of 3 zero mappings, the ZC sequence time domain is represented by SEQ, and the ZC sequence time domain length is represented by $T_{SEQ}$. The ZC sequence length corresponding to subcarrier mapping 1 is 239, the ZC sequence length corresponding to subcarrier mapping 2 is 113, and the ZC sequence length corresponding to subcarrier mapping 3 is 59. FIG. 4A to 4C are schematic diagrams of the above three subcarrier mapping methods, FIG. 4A is a schematic diagram of subcarrier mapping 1, FIG. 4B is a schematic diagram of subcarrier mapping 2, and FIG. 4C is a schematic diagram of subcarrier mapping 3, where $N_{gp}$=8, $k$=120. The above three subcarrier mapping methods correspond to three SEQ structures in the time domain. Inserting zero in the frequency domain is equivalent to repetition in the time domain. The time domain SEQ structure corresponding to subcarrier mapping 1 is shown in FIG. 5A, the time domain SEQ structure corresponding to subcarrier mapping 2 is shown in FIG. 5B, and the time domain SEQ structure corresponding to subcarrier mapping 3 is shown in FIG. 5C. Since one zero is inserted in the frequency domain, there are two repetitions in the time domain SEQ structure shown in FIG. 5B; since three zeros are inserted in the frequency domain, there are four repetitions in the time domain structure shown in FIG. 5C.

Furthermore, in order to improve the flexibility of industrial wireless network access, the time domain structure of the uplink synchronization signal is configured based on the sequence length of the ZC sequence, and the time domain structure is configured as at least one of the following structures: 1-symbol alignment format time domain structure, 2-symbol alignment format time domain structure, preparatory advance format time domain structure and CP1 padding format time domain structure.

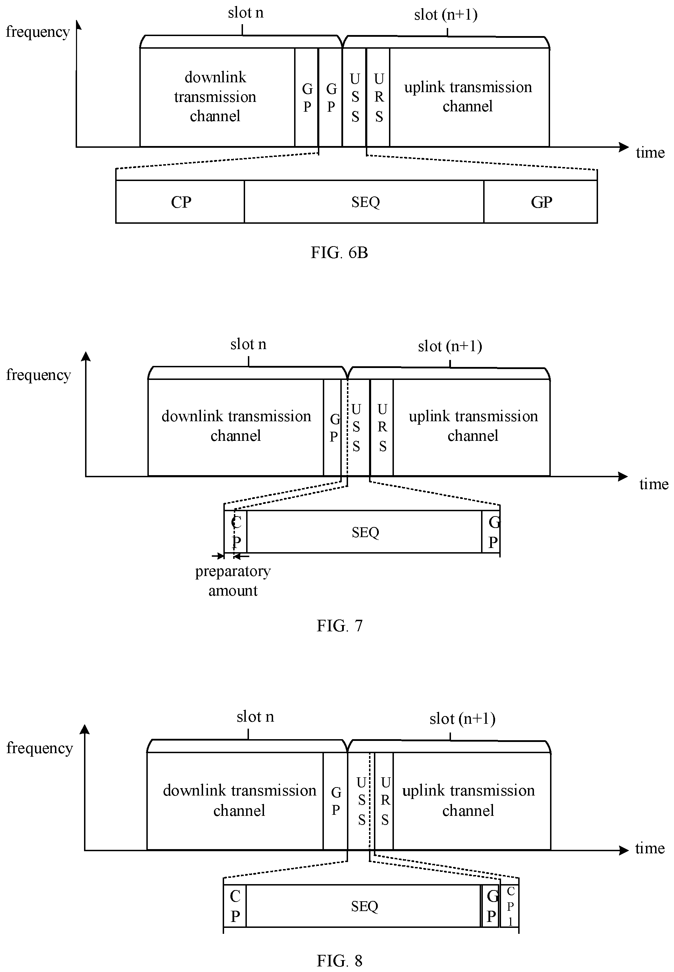

It can be understood that the 1-symbol alignment format time domain structure and the 2-symbol alignment format time domain structure can be collectively referred to as the symbol alignment format time domain structure. The 1-symbol alignment format time domain structure can be referred to FIG. 6 A, the 2-symbol alignment format time domain structure can be referred to FIG. 6B, the reserve advance format time domain structure can be referred to FIG. 7, and the CP1 padding format time domain structure can be referred to FIG. 8, where CP1 is the CP length of the next orthogonal frequency division multiplexing (OFDM) symbol. The 1-symbol alignment format time domain structure, the 2-symbol alignment format time domain structure, the reserve advance format time domain structure, and the CP1 padding format time domain structure can be selectively combined according to the sequence length of the ZC sequence.

In an embodiment, for ZC sequences with sequence lengths of 59, 113, and 239, three specific configuration cases are provided based on the time domain structure under the frame structure shown in FIG. 6 to FIG. 8. The configuration parameters can be referred to in Table 1:

Table 1

| Time domain format | | ZC sequence length | | |
|---|---|---|---|---|
| | | 59 | 113 | 239 |
| Symbol alignment format | 1 Symbol alignment format | Y | Y | Y |
| | 2-symbol alignment format | N | Y | Y |
| preparatory advance format | | Y | Y | Y |
| CP1 padding format | | Y | Y | Y |

In Table 2, Y indicates that the corresponding configuration is included, and N indicates that the corresponding configuration is not included.

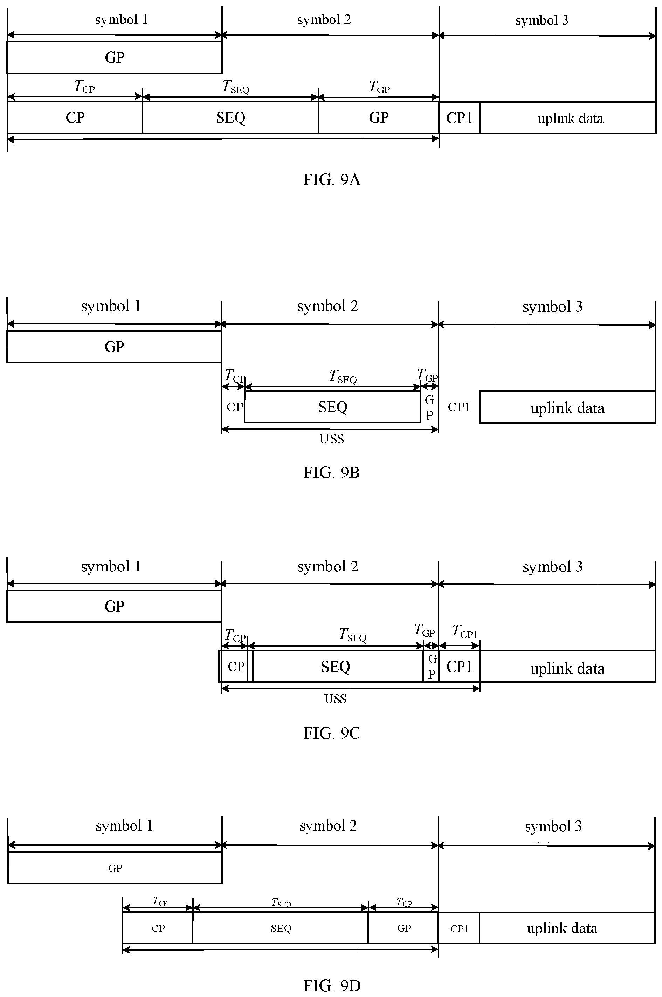

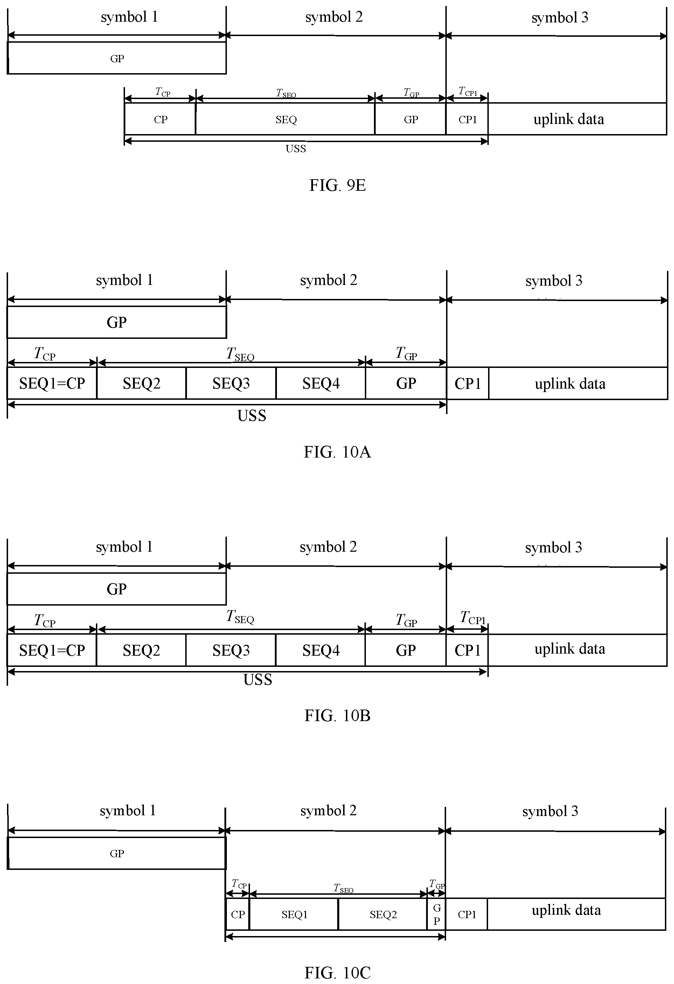

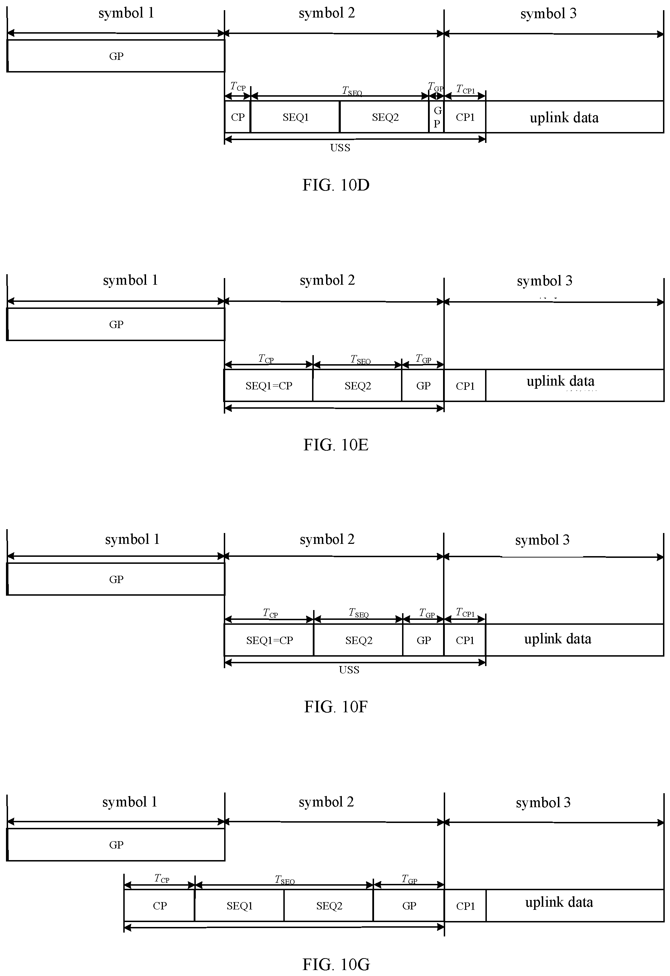

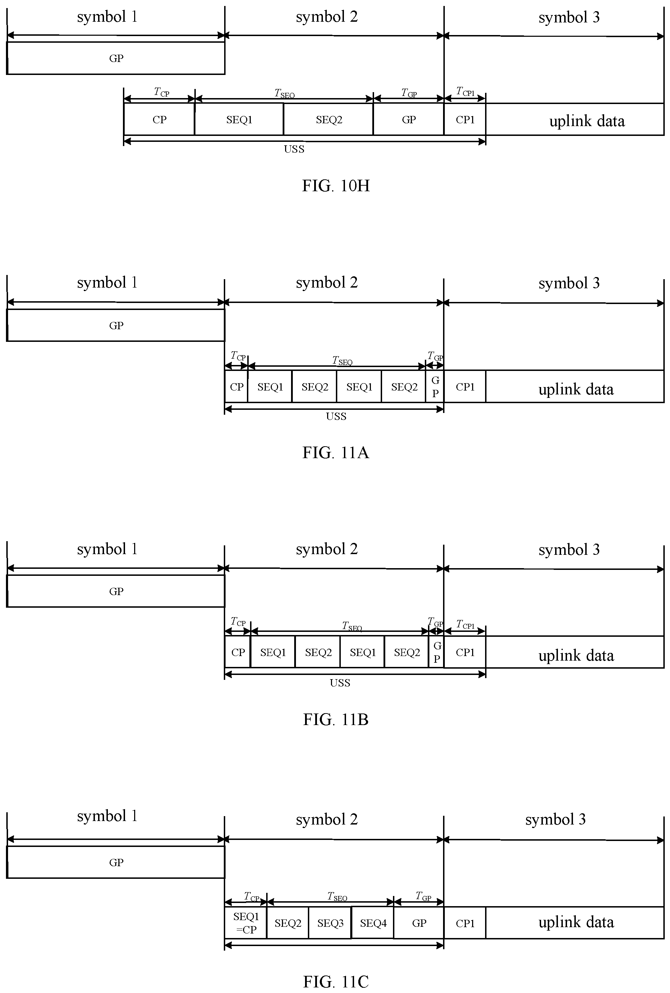

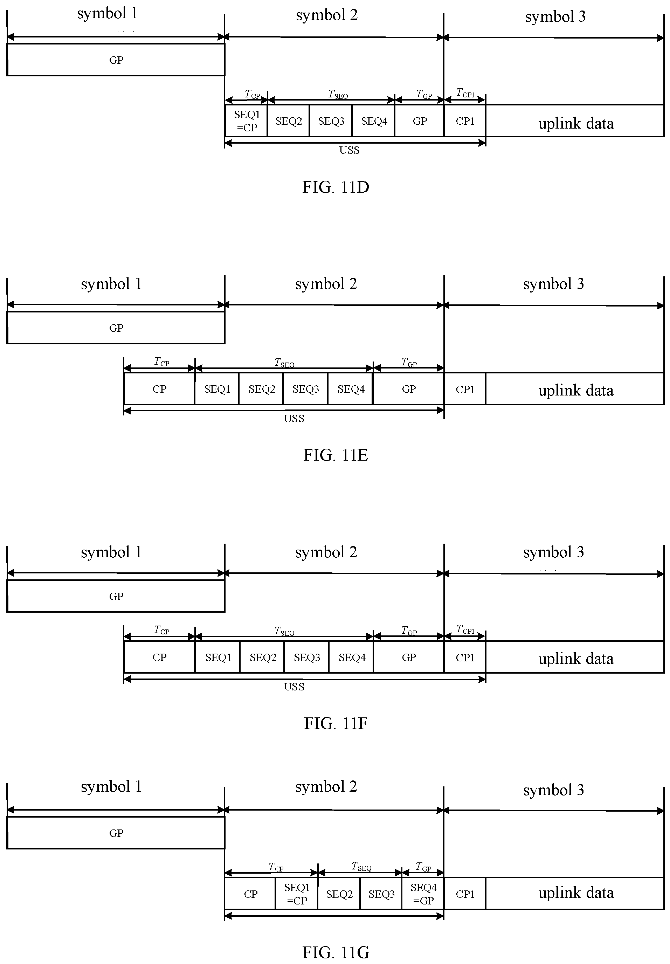

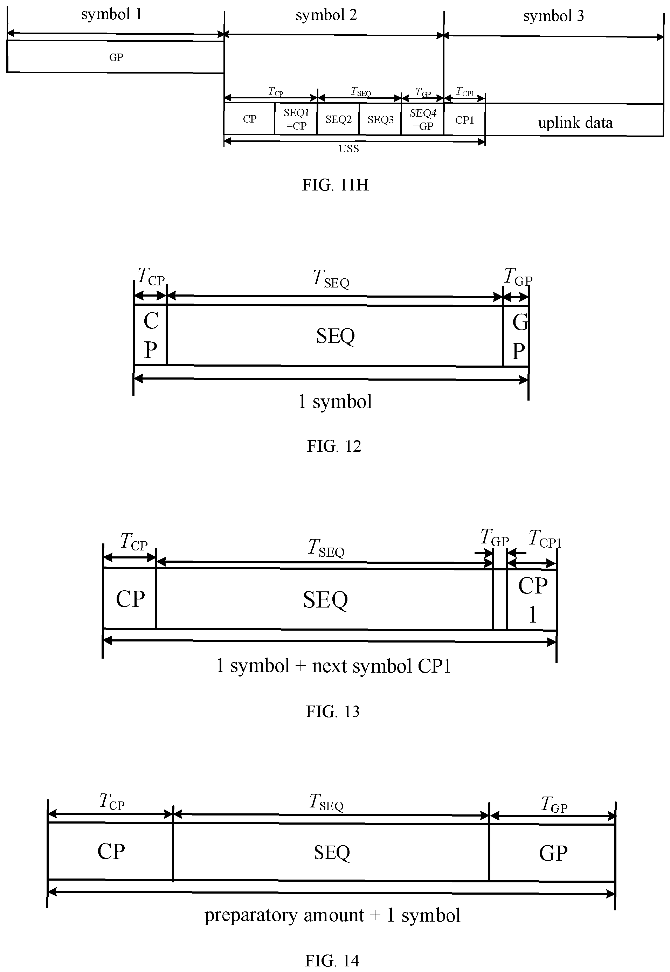

In an example, FIG. 9A to 9E are schematic diagrams of the time domain structure when the ZC sequence length is 239, FIG. 9A is a schematic diagram of the time domain structure of a 2-symbol alignment format when the ZC sequence length is 239, FIG. 9B is a schematic diagram of the time domain structure of a 1-symbol alignment format when the ZC sequence length is 239, FIG. 9C is a schematic diagram of the time domain structure of a 1-symbol alignment format + CP1 padding format when the ZC sequence length is 239, FIG. 9D is a schematic diagram of the time domain structure of a reserve advance format when the ZC sequence length is 239, and FIG. 9E is a schematic diagram of the time domain structure of a reserve advance format + CP1 padding format when the ZC sequence length is 239. FIG. 10A to 10H are schematic diagrams of the time domain structure when the ZC sequence length is 113, and in FIG. 10A, 10B, and 10( In the time domain structures of FIG. 10 E and FIG. 10F, SEQ11 acts as the CP in the USS. FIG. 10 A is a schematic diagram of the time domain structure of the 2-symbol alignment format SEQ1 filled with CP when the ZC sequence length is 113, FIG. 10B is a schematic diagram of the time domain structure of the 2-symbol alignment format SEQ11 filled with CP+CP1 padding format when the ZC sequence length is 113, FIG. 10C is a schematic diagram of the time domain structure of the 1-symbol alignment format when the ZC sequence length is 113, FIG. 10 D is a schematic diagram of the time domain structure of the 1-symbol alignment format + CP1 padding format when the ZC sequence length is 113, FIG. 10 E is a schematic diagram of the time domain structure of the 1-symbol alignment format SEQ11 filled with CP when the ZC sequence length is 113, and FIG. 10F is a schematic diagram of the time domain structure of the 1-symbol alignment format SEQ11 filled with CP when the ZC sequence length is 113. FIG. 10G is a schematic diagram of the time domain structure of the preparatory advance format when the ZC sequence length is 113, and FIG. 10H is a schematic diagram of the time domain structure of the preparatory advance format + CP1 padding when the ZC sequence length is 113. FIG. 11A to FIG. 11F are schematic diagrams of the time domain structure when the ZC sequence length is 59. In the time domain structures in FIG. 11C and FIG. 11D, SEQ1 acts as the CP in the USS, and in the time domain structures shown in FIG. 11G and FIG. 11H, SEQ1 acts as the CP in the USS, and SEQ4 acts as the GP in the USS; FIG. 11A is a schematic diagram of the time domain structure of the 1-symbol alignment format when the ZC sequence length is 59, and FIG. 11(b) is a schematic diagram of the time domain structure of the 1-symbol alignment format + CP1 padding when the ZC sequence length is 59. Structural schematic diagram, FIG. 11C is a schematic diagram of the time domain structure of 1-symbol alignment format SEQ1 filled with CP when the ZC sequence length is 59, FIG. 11 D is a schematic diagram of the time domain structure of 1-symbol alignment format SEQ1 filled with CP+CP1 when the ZC sequence length is 59, FIG. 11 E is a schematic diagram of the time domain structure of the preparatory advance format when the ZC sequence length is 59, FIG. 11 F is a schematic diagram of the time domain structure of the preparatory advance format + CP1 padding format when the ZC sequence length is 59, FIG. 11 G is a schematic diagram of the time domain structure of 1-symbol alignment format SEQ1 filled with CP and SEQ4 filled with GP when the ZC sequence length is 59, FIG. 11 H is a schematic diagram of the time domain structure of 1-symbol alignment format SEQ1 filled with CP and SEQ4 filled with GP + CP1 padding format when the ZC sequence length is 59.

This embodiment can configure a sequence length corresponding to the system coverage radius, and configure a time domain structure that matches the system coverage radius based on the sequence length, thereby improving wireless resource utilization while meeting low latency requirements in industrial scenarios.

In some embodiments, the system coverage radius includes a first indoor basic coverage radius, a second indoor basic coverage radius, a first indoor enhanced coverage radius, a second indoor enhanced coverage radius and an outdoor enhanced coverage radius. The first indoor basic coverage radius is less than the second indoor basic coverage radius, the second indoor basic coverage radius is less than the first indoor enhanced coverage radius, the first indoor enhanced coverage radius is less than the second indoor enhanced coverage radius, and the second indoor enhanced coverage radius is less than the outdoor enhanced coverage radius.

It can be understood that the system coverage radius is not limited to the first indoor basic coverage radius, the second indoor basic coverage radius, the first indoor enhanced coverage radius, the second indoor enhanced coverage radius and the outdoor enhanced coverage radius. Other coverage radius can be set according to specific industrial application scenarios, which is not limited in this embodiment.

Furthermore, in order to improve the utilization of wireless resources while meeting the access requirements of terminal stations, if the system coverage radius is the first indoor basic coverage radius, the time domain structure of the uplink synchronization signal is composed of the first cyclic prefix length, sequence length and first guard time interval length, which is 1 OFDM symbol length.

In an embodiment, the ZC sequence length $N_{ZC}$, CP length $T_{CP}$, and GP length $T_{GP}$ are determined according to the access parameter set, where $N_{ZC}<N_{Data}$, and there are three options for $N_{ZC}$ according to the coverage radius: $N_{ZC} \in \{59, 113, 239\}$. $T_{CP}$ is greater than or equal to the sum of the propagation round-trip delay of the first indoor basic coverage radius and the channel delay spread. $T_{GP}$ is greater than or equal to the propagation round-trip delay of the first indoor basic coverage radius. The time domain length of the ZC sequence is represented by $T_{SEQ}$, and the time domain structure of the uplink synchronization signal corresponding to the first indoor basic coverage radius can be referred to FIG. 12, and the time domain structure is composed of $T_{CP}$, $T_{SEQ}$ and $T_{GP}$ as one OFDM symbol length.

Furthermore, in order to improve the utilization of wireless resources while meeting the access requirements of terminal stations, if the system coverage radius is the second indoor basic coverage radius, the time domain structure of the uplink synchronization signal is composed of the first cyclic prefix length, the sequence length, the first guard time interval length and the next symbol CP1 length, which is 1 OFDM symbol length plus the next symbol CP1 length.

In an embodiment, the time domain structure of the uplink synchronization signal corresponding to the second indoor basic coverage radius can be referred to FIG. 13. The time domain structure of the uplink synchronization signal corresponding to the second indoor basic coverage radius is composed of the first cyclic prefix length $T_{CP}$, the ZC sequence time domain length $T_{SEQ}$, the first guard time interval length $T_{GP}$ and the next symbol CP1 length $T_{CP1}$, which is composed of 1 OFDM symbol plus the next symbol CP1 length, where one symbol CP1 length is the CP length of the next OFDM symbol. The second indoor basic coverage radius is achieved by increasing the service radius on the basis of the first indoor basic coverage radius through $T_{CP1}$.

Furthermore, in order to improve the utilization of wireless resources while meeting the access requirements of terminal stations, if the system coverage radius is the first indoor enhanced coverage radius, the time domain structure of the uplink synchronization signal is composed of a second cyclic prefix length, a sequence length, and a second guard time interval length, which is 1 OFDM symbol length plus a preparatory amount. The second cyclic prefix length is greater than the first cyclic prefix length, and the second guard time interval length is greater than the first guard time interval length.

In an embodiment, the time domain structure of the uplink synchronization signal corresponding to the first indoor enhanced coverage radius can be referred to FIG. 14. The time domain structure of the uplink synchronization signal corresponding to the first indoor enhanced coverage radius is composed of the second cyclic prefix length $T_{CP2}$, the ZC sequence time domain length $T_{SEQ}$, and the second guard time interval length $T_{GP2}$, which is composed of 1 OFDM symbol length plus a preparatory amount, and the preparatory amount is obtained by the time length in advance of the previous GP symbol.

Furthermore, in order to improve the utilization of wireless resources while meeting the access requirements of terminal stations, if the system coverage radius is the second indoor enhanced radius, the time domain structure of the uplink synchronization signal is composed of the second cyclic prefix length, the sequence length, the second guard time interval length and the next symbol CP1 length, which is composed of 1 OFDM symbol length plus the next symbol CP1 length plus a preparatory amount.

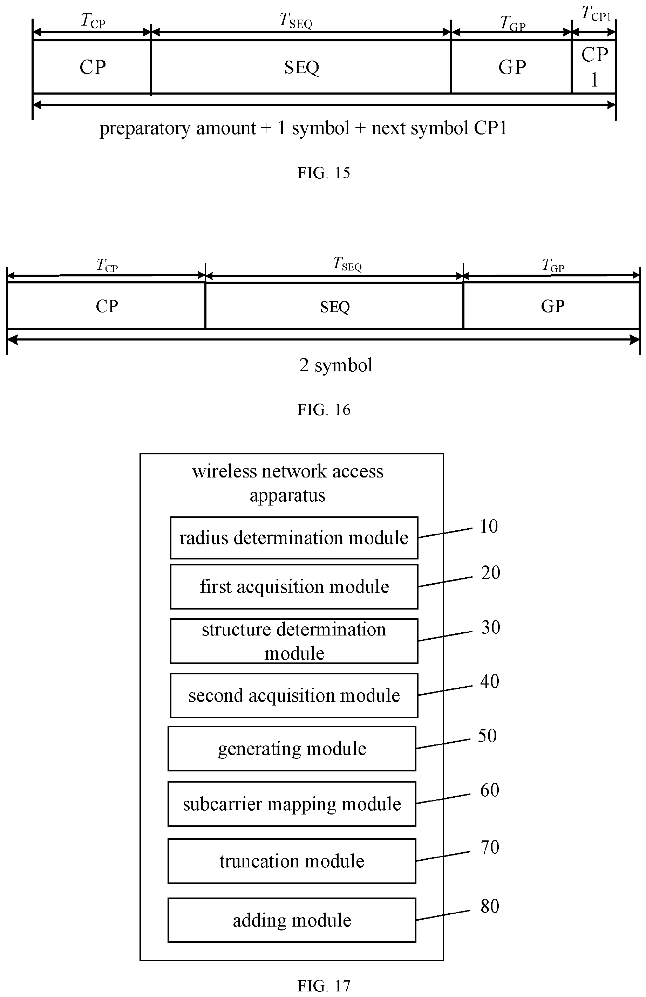

In an embodiment, the time domain structure of the uplink synchronization signal corresponding to the second indoor enhanced coverage radius can be referred to FIG. 15. The time domain structure of the uplink synchronization signal corresponding to the second indoor enhanced coverage radius is composed of the second cyclic prefix length $T_{CP2}$, the ZC sequence time domain length $T_{SEQ}$, the second guard time interval length $T_{GP2}$ and the next symbol CP1 length $T_{CP1}$, which is 1 OFDM symbol length plus the next symbol CP1 length plus a preparatory amount, and the preparatory amount is obtained by the time length ahead of the previous GP symbol.

In some embodiments, if the system coverage radius is an outdoor enhanced coverage radius, the time domain structure of the uplink synchronization signal is composed of a third cyclic prefix length, a sequence length, and a third guard time interval length, which are 2 OFDM symbol lengths, the third cyclic prefix length is greater than the second cyclic prefix length, and the third guard time interval length is greater than the second guard time interval length.

In an embodiment, the time domain structure of the uplink synchronization signal corresponding to the outdoor enhanced coverage radius can be referred to FIG. 16. The time domain structure of the uplink synchronization signal corresponding to the outdoor enhanced coverage radius is composed of 2 OFDM symbol lengths including the third cyclic prefix length $T_{CP3}$, the ZC sequence time domain length $T_{SEQ}$ and the third guard time interval $T_{GP3}$ length.

In an embodiment, assuming that the physical channel has a bandwidth of 20M, an inverse fast Fourier transform (IFFT) is used, and the IFFT length $N_{IFFT}$ = 256, where the number of useful data subcarriers $N_{Data}$ = 240, the number of protection subcarriers on both sides $N_{gp}$ = 8, and the number of DC subcarriers $N_{NULL}$ = 3. The sequence is a ZC sequence, and the initial value for generating sequence is the root value of the ZC sequence, and each ZC sequence occupies a full bandwidth of 20M.

It should be noted that, under 20M bandwidth, when $N_{IFFT}$ = 256, the length of $N_{ZC}$ can be 59, 113, 239, but under different bandwidths and different $N_{IFFT}$ lengths, the length of $N_{ZC}$ may be different, as long as the subcarrier mapping length condition is met. The present application only cites the optimal sequence length under the 20M bandwidth setting, and other bandwidths are not described in detail in this embodiment.

The system coverage radius determined according to the system configuration information sent by the management station is the first indoor basic coverage radius, and the ZC sequence length $N_{ZC}$, CP length $T_{CP}$ and GP length $T_{GP}$ are determined according to the access parameter set, where $N_{ZC} < N_{Data}$, and there are three options for $N_{ZC}$ according to the coverage radius: $N_{ZC} \in \{59, 113, 239\}$. $T_{CP}$ is greater than or equal to the sum of the propagation round-trip delay of the first indoor basic coverage radius and the channel delay spread. $T_{GP}$ is greater than or equal to the propagation round-trip delay of the first indoor basic coverage radius. The USS time domain structure is determined according to the system coverage radius; the ZC sequence root value and the base cyclic shift size; where the root value $u \in \{1, ..., N_{ZC} - 1\}$. The ZC sequence root value and the base cyclic shift size are system default parameters, and can also be obtained from the upper layer, where the base cyclic shift size can vary with the coverage radius and the ZC sequence length. Assuming that the system design coverage radius is less than or equal to 1000 meters, the base cyclic shift size can be determined based on Table 2. Table 2 is a schematic table of base cyclic shift size values under different coverage radii:

Table 2

| Base cyclic shift size | | | Coverage radius (m) |
|---|---|---|---|
| $N_{ZC}$ = 59 | $N_{ZC}$ = 113 | $N_{ZC}$ = 239 | |
| 44 | 42 | 45 | 50 |
| 51 | 49 | 52 | 100 |
| 58 | 55 | 58 | 150 |
| / | 62 | 65 | 200 |
| / | 68 | 72 | 250 |
| / | 75 | 79 | 300 |

(continued)

| Base cyclic shift size | | | Coverage radius (m) |
|---|---|---|---|
| $N_{ZC}$ = 59 | $N_{ZC}$ = 113 | $N_{ZC}$ = 239 | |
| / | 81 | 86 | 350 |
| / | 88 | 93 | 400 |
| / | 94 | 99 | 450 |
| / | 100 | 106 | 500 |
| / | / | 175 | 1000 |

The unique identification number of the terminal station is determined. The unique cyclic shift size corresponding to the terminal station is calculated by formula (2) according to the unique identification number and the determined base cyclic shift size. The ZC sequence having the above-mentioned USS time domain structure corresponding to each terminal station is generated according to the initial value for generating sequence and the unique cyclic shift size. The ZC sequence can be generated by formula (3).

$$x_{u,v}(n) = e^{-j\pi un(n+1)/Nzc}, \; u \in \{1, ..., N_{ZC} - 1\}, \; n = 0, 1, ..., N_{ZC} - 1 \text{ (Formula 3)}$$

The ZC sequence is subcarrier mapped according to the sequence length of the ZC sequence, the mapped sequence is IFFT transformed to the time domain, and a CP of a corresponding length is added to obtain a USS. The IFFT length $N_{IFFT}$ = 256 is used to perform a 256-point IFFT transform on the generated ZC sequence of the terminal station, the added CP is added in front of the ZC sequence time domain signal after the IFFT transform, and the CP is obtained by intercepting the tail of the ZC sequence time domain signal after subcarrier mapping; the USS is subsequently processed and sent to the MS.

It should be noted that traditional wireless LANs meet short-range wireless communications. In fact, on the one hand, it is difficult to meet the access requirements of terminal stations and the access performance of management stations in a larger range within the industry, especially the outdoor coverage radius. Mobile communication LTE and 5G NR systems are aimed at mobile communication scenarios, with a larger coverage radius, which leads to more waste of resources.

This embodiment flexibly configures access parameter sets, CP and GP to meet access requirements of different coverage radii. In addition, compared with traditional wireless LAN and mobile communication LTE and 5GNR, which occupy more wireless resources, this embodiment greatly improves the delay performance of the wireless access network through the access of 1~2 OFDM time domain symbols.

In addition, an embodiment of the present application further provides a storage medium, on which a wireless network access program is stored. When the wireless network access program is executed by a processor, the steps of the wireless network access method described above are implemented.

FIG. 17 is structural block diagram of a wireless network access apparatus according to an embodiment of the present application.

As shown in FIG. 17, the wireless network access apparatus provided in the embodiment of the present application includes:

a radius determination module 10, configured to determine a system coverage radius according to system configuration information issued by a management station;
a first acquisition module 20, configured to acquire an access parameter set, a cyclic prefix length, and a guard time interval length according to the system configuration information and the system coverage radius;
a structure determination module 30, configured to determine a time domain structure of an uplink synchronization signal according to the access parameter set, the cyclic prefix length, and the guard time interval length;
a second acquisition module 40, configured to acquire a unique cyclic shift size corresponding to each terminal station according to a unique identification number of each terminal station;
a generating module 50, configured to generate an access sequence for each terminal station according to the access parameter set and the unique cyclic shift size;
a subcarrier mapping module 60, configured to perform subcarrier mapping on the access sequence and converting the access sequence after subcarrier mapping into a sequence time domain signal;
a truncation module 70, configured to truncate a cyclic prefix at the tail of the sequence time domain signal according to the cyclic prefix length; and

an adding module 80, configured to the cyclic prefix to the sequence time domain signal to obtain an uplink synchronization signal with the time domain structure corresponding to each terminal station, so that each terminal station accesses a wireless network according to the corresponding uplink synchronization signal.

In this embodiment, the system coverage radius is determined according to the system configuration information sent by the management station. The access parameter set, the cyclic prefix length and the guard time interval length are obtained according to the system configuration information and the system coverage radius. The time domain structure of the uplink synchronization signal is determined according to the access parameter set, the cyclic prefix length and the guard time interval length. The unique cyclic shift size corresponding to each terminal station is obtained according to the unique identification number of each terminal station. The access sequence of each terminal station is generated according to the access parameter set and the unique cyclic shift size. The access sequence is subcarrier mapped, and the access sequence after subcarrier mapping is converted into a sequence time domain signal. The cyclic prefix is intercepted at the tail of the sequence time domain signal according to the cyclic prefix length. The cyclic prefix is added to the sequence time domain signal to obtain the uplink synchronization signal with the time domain structure corresponding to each terminal station, so that each terminal station can access the wireless network according to the corresponding uplink synchronization signal. The system configuration information in this embodiment can be updated according to the specific industrial wireless network access scenario, and the access function of the terminal station in the industrial wireless network is realized through the configurable and updateable parameters, which can uniformly and efficiently manage the terminal stations, reduce the access delay of the industrial wireless network, and improve the reliability, robustness and flexibility of the operation of the wireless access network.

Based on the above-mentioned first embodiment of the wireless network access device of the present application, a second embodiment of the wireless network access device of the present application is provided.

In this embodiment, the radius determination module 10 is further configured to calculate the propagation round-trip delay based on the coverage radius of each system, and determine the channel delay spread; set the cyclic prefix length of each system coverage radius to be greater than or equal to a sum of the round-trip propagation delay and the channel delay spread corresponding to each system coverage radius; and

set the guard time interval length corresponding to each system coverage radius to be greater than or equal to the round-trip propagation delay corresponding to each system coverage radius.

The second acquisition module 40 is further configured to determine a base cyclic shift size and a sequence length according to the access parameter set; and determine the unique cyclic shift size corresponding to each terminal station according to the unique identification number of each terminal station, the base cyclic shift size, and the sequence length.

The generating module 50 is further configured to generate an access sequence of each terminal station using a sequence generation formula according to the sequence length, the initial value, and the unique cyclic shift size; the sequence generating formula is:

$$x_{u,v}(n + v), u \in \{1, \ldots, N_{ZC} - 1\}, n = 0, 1, \ldots, N - 1$$

The modulo (N - 1) operation is performed on (n + v) to ensure (n + v) does not exceed the sequence length.

In the formula, $u$ is the initial value for generating sequence, $v$ is the unique cyclic shift size, $N_{ZC}$ is the sequence length, and $N_{ZC}$ is less than or equal to a total number of subcarriers.

Other embodiments or specific implementations of the wireless network access apparatus of the present application can refer to the above-mentioned method embodiments, which will not be described in detail here.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present application are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

**Claims**

1. A wireless network access method, **characterized by** comprising:

   determining a system coverage radius according to system configuration information issued by a management station;

   acquiring an access parameter set, a cyclic prefix length, and a guard time interval length according to the system configuration information and the system coverage radius;

   determining a time domain structure of an uplink synchronization signal according to the access parameter set, the cyclic prefix length, and the guard time interval length;

   acquiring a unique cyclic shift size corresponding to each terminal station according to a unique identification number of each terminal station;

   generating an access sequence for each terminal station according to the access parameter set and the unique cyclic shift size;

   performing subcarrier mapping on the access sequence and converting the access sequence after subcarrier mapping into a sequence time domain signal;

   truncating a cyclic prefix at the tail of the sequence time domain signal according to the cyclic prefix length; and adding the cyclic prefix to the sequence time domain signal to obtain an uplink synchronization signal with the time domain structure corresponding to each terminal station, so that each terminal station accesses a wireless network according to the corresponding uplink synchronization signal.

2. The method according to claim 1, wherein before the determining the system coverage radius according to the system configuration information issued by the management station, the method further comprises:

   calculating a round-trip propagation delay based on each system coverage radius and determining a channel delay spread;

   setting the cyclic prefix length of each system coverage radius to be greater than or equal to a sum of the round-trip propagation delay and the channel delay spread corresponding to each system coverage radius; and

   setting the guard time interval length corresponding to each system coverage radius to be greater than or equal to the round-trip propagation delay corresponding to each system coverage radius.

3. The method according to claim 1, wherein the acquiring the unique cyclic shift size corresponding to each terminal station according to the unique identification number of each terminal station comprises:

   determining a base cyclic shift size and a sequence length according to the access parameter set; and

   determining the unique cyclic shift size corresponding to each terminal station according to the unique identification number of each terminal station, the base cyclic shift size, and the sequence length.

4. The method according to claim 1, wherein the access parameter set comprises a sequence length and an initial value for generating a sequence, and the generating the access sequence for each terminal station according to the access parameter set and the unique cyclic shift size comprises:

   generating the access sequence of each terminal station using a sequence generation formula according to the sequence length, the initial value, and the unique cyclic shift size;

   wherein the sequence generation formula is:

   $$x_{u,v}(n + v), u \in \{1, \ldots, N_{ZC} - 1\}, n = 0, 1, \ldots, N - 1$$

   a modulo ($N$ - 1) operation is performed on ($n + v$) to ensure ($n + v$) does not exceed the sequence length, $u$ is the initial value for generating sequence, v is the unique cyclic shift size, $N_{ZC}$ is the sequence length, and $N_{ZC}$ is less than or equal to a total number of subcarriers.

5. The method according to any one of claims 1 to 4, wherein the access sequence of each terminal station is a ZC sequence, and a sequence length of the ZC sequence comprises 239, 113 and 59.

6. The method according to claim 5, wherein the time domain structure of the uplink synchronization signal is configured based on the sequence length of the ZC sequence, and the time domain structure is configured as at least one of the following structures: a 1-symbol alignment format time domain structure, a 2-symbol alignment format time domain structure, a preparatory advance format time domain structure, and a CP1 padding format time domain structure.

7. The method according to any one of claims 1 to 4, wherein the system coverage radius comprises a first indoor basic coverage radius, a second indoor basic coverage radius, a first indoor enhanced coverage radius, a second indoor enhanced coverage radius and an outdoor enhanced coverage radius, the first indoor basic coverage radius is less than the second indoor basic coverage radius, the second indoor basic coverage radius is less than the first indoor enhanced coverage radius, the first indoor enhanced coverage radius is less than the second indoor enhanced coverage radius, and the second indoor enhanced coverage radius is less than the outdoor enhanced coverage radius.

8. The method according to claim 7, wherein in response to that the system coverage radius is the first indoor basic coverage radius, the time domain structure of the uplink synchronization signal comprises a first cyclic prefix length, a sequence length and a first guard time interval length to form one OFDM symbol length.

9. The method according to claim 7, wherein in response to that the system coverage radius is the second indoor basic coverage radius, the time domain structure of the uplink synchronization signal comprises the first cyclic prefix length, the sequence length, the first guard time interval length and a next symbol CP1 length to form one OFDM symbol length plus the next symbol CP1 length.

10. The method according to claim 7, wherein in response to that the system coverage radius is the first indoor enhanced coverage radius, the time domain structure of the uplink synchronization signal comprises a second cyclic prefix length, a sequence length and a second guard time interval length to form one OFDM symbol length plus a preparatory amount, the second cyclic prefix length is greater than the first cyclic prefix length, and the second guard time interval length is greater than the first guard time interval length.

11. The method according to claim 7, wherein in response to that the system coverage radius is the second indoor enhanced coverage radius, the time domain structure of the uplink synchronization signal comprises the second cyclic prefix length, the sequence length, the second guard time interval length and the next symbol CP1 length to form one OFDM symbol length plus the next symbol CP1 length plus a preparatory amount.

12. The method according to claim 7, wherein in response to that the system coverage radius is an outdoor enhanced coverage radius, the time domain structure of the uplink synchronization signal comprises a third cyclic prefix length, a sequence length and a third guard time interval length to form two OFDM symbol lengths, the third cyclic prefix length is greater than the second cyclic prefix length, and the third guard time interval length is greater than the second guard time interval length.

13. The method according to claim 5, wherein in response to that the sequence length of the ZC sequence is 239, the subcarrier mapping mode of the ZC sequence is non-insertion mapping;

in response to that the sequence length of the ZC sequence is 113, the subcarrier mapping method of the ZC sequence is to insert 1 zero mapping; and
in response to that the sequence length of the ZC sequence is 59, the subcarrier mapping method of the ZC sequence is to insert 3 zero mappings.

14. A wireless network access apparatus, **characterized by** comprising:

a radius determination module, configured to determine a system coverage radius according to system configuration information issued by a management station;
a first acquisition module, configured to acquire an access parameter set, a cyclic prefix length, and a guard time interval length according to the system configuration information and the system coverage radius;

a structure determination module, configured to determine a time domain structure of an uplink synchronization signal according to the access parameter set, the cyclic prefix length, and the guard time interval length;

a second acquisition module, configured to acquire a unique cyclic shift size corresponding to each terminal station according to a unique identification number of each terminal station;

a generating module, configured to generate an access sequence for each terminal station according to the access parameter set and the unique cyclic shift size;

a subcarrier mapping module, configured to perform subcarrier mapping on the access sequence and converting the access sequence after subcarrier mapping into a sequence time domain signal;

a truncation module, configured to truncate a cyclic prefix at the tail of the sequence time domain signal according to the cyclic prefix length; and

an adding module, configured to the cyclic prefix to the sequence time domain signal to obtain an uplink synchronization signal with the time domain structure corresponding to each terminal station, so that each terminal station accesses a wireless network according to the corresponding uplink synchronization signal.

15. A wireless network access system, **characterized by** comprising a memory, a processor, and a wireless network access program stored in the memory and executable on the processor, wherein the wireless network access program is configured to implement the wireless network access method according to any one of claims 1 to 13.

16. A storage medium, on which a wireless network access program is stored, **characterized in that**, when the program is executed by a processor, the wireless network access method according to any one of claims 1 to 13 are implemented.

FIG. 1

determining a system coverage radius according to system configuration information issued by a management station — S10

↓

acquiring an access parameter set, a cyclic prefix length, and a guard time interval length according to the system configuration information and the system coverage radius — S20

↓

determining a time domain structure of an uplink synchronization signal according to the access parameter set, the cyclic prefix length, and the guard time interval length — S30

↓

acquiring a unique cyclic shift size corresponding to each terminal station according to a unique identification number of each terminal station — S40

↓

generating an access sequence for each terminal station according to the access parameter set and the unique cyclic shift size — S50

↓

performing subcarrier mapping on the access sequence and converting the access sequence after subcarrier mapping into a sequence time domain signal — S60

↓

truncating a cyclic prefix at the tail of the sequence time domain signal according to the cyclic prefix length — S70

↓

adding the cyclic prefix to the sequence time domain signal to obtain an uplink synchronization signal with the time domain structure corresponding to each terminal station, so that each terminal station accesses a wireless network according to the corresponding uplink synchronization signal — S80

FIG. 2

```
┌─────────────────────────────────────────────────────────┐
│  determining a base cyclic shift size and a sequence     │ ⟋ S401
│  length according to the access parameter set            │
└─────────────────────────────────────────────────────────┘
                            │
                            ▼
┌─────────────────────────────────────────────────────────┐
│  determining the unique cyclic shift size corresponding  │ ⟋ S402
│  to each terminal station according to the unique        │
│  identification number of each terminal station, the     │
│  base cyclic shift size, and the sequence length         │
└─────────────────────────────────────────────────────────┘
```

FIG. 3

FIG. 4A

FIG. 4B

FIG. 4C

time domain structure
corresponding to subcarrier
mapping 1

$T_{\text{SEQ}}$

SEQ

FIG. 5A

time domain structure
corresponding to subcarrier
mapping 2

$T_{\text{SEQ}}$

| SEQ11 | SEQ12 |

FIG. 5B

time domain structure
corresponding to subcarrier
mapping 3

$T_{\text{SEQ}}$

| SEQ1 | SEQ2 | SEQ3 | SEQ4 |

FIG. 5C

frequency

slot n          slot (n+1)

| downlink transmission channel | G P | U S S | U R S | uplink transmission channel |

time

| C P | SEQ | G P |

FIG. 6A

FIG. 6B

FIG. 7

FIG. 8

| symbol 1 | symbol 2 | symbol 3 |
|---|---|---|

| GP | | |

| $T_{CP}$ | $T_{SEQ}$ | $T_{GP}$ | | |

| CP | SEQ | GP | CP1 | uplink data |

FIG. 9A

| symbol 1 | symbol 2 | symbol 3 |
|---|---|---|

| GP | | |

| $T_{CP}$ | $T_{SEQ}$ | $T_{GP}$ |

| CP | SEQ | G P | CP1 | uplink data |

USS

FIG. 9B

| symbol 1 | symbol 2 | symbol 3 |
|---|---|---|

| GP | | |

| $T_{CP}$ | $T_{SEQ}$ | $T_{GP}$ | $T_{CP1}$ |

| CP | SEQ | G P | CP1 | uplink data |

USS

FIG. 9C

| symbol 1 | symbol 2 | symbol 3 |
|---|---|---|

| GP | | |

| $T_{CP}$ | $T_{SEQ}$ | $T_{GP}$ |

| CP | SEQ | GP | CP1 | uplink data |

FIG. 9D

FIG. 9E

FIG. 10A

FIG. 10B

FIG. 10C

FIG. 10D

FIG. 10E

FIG. 10F

FIG. 10G

| symbol 1 | symbol 2 | symbol 3 |
|---|---|---|

GP

| | $T_{CP}$ | $T_{SEQ}$ | | $T_{GP}$ | $T_{CP1}$ | |
|---|---|---|---|---|---|---|
| | CP | SEQ1 | SEQ2 | GP | CP1 | uplink data |

USS

FIG. 10H

| symbol 1 | symbol 2 | symbol 3 |
|---|---|---|

GP

| $T_{CP}$ | | $T_{SEQ}$ | | | $T_{GP}$ | | |
|---|---|---|---|---|---|---|---|
| CP | SEQ1 | SEQ2 | SEQ1 | SEQ2 | G P | CP1 | uplink data |

USS

FIG. 11A

| symbol 1 | symbol 2 | symbol 3 |
|---|---|---|

GP

| $T_{CP}$ | | $T_{SEQ}$ | | | $T_{GP}$ | $T_{CP1}$ | |
|---|---|---|---|---|---|---|---|
| CP | SEQ1 | SEQ2 | SEQ1 | SEQ2 | G P | CP1 | uplink data |

USS

FIG. 11B

| symbol 1 | symbol 2 | symbol 3 |
|---|---|---|

GP

| $T_{CP}$ | | $T_{SEQ}$ | | $T_{GP}$ | | |
|---|---|---|---|---|---|---|
| SEQ1 =CP | SEQ2 | SEQ3 | SEQ4 | GP | CP1 | uplink data |

FIG. 11C

| GP | | | | | | |
|---|---|---|---|---|---|---|
| symbol 1 | | symbol 2 | | | symbol 3 | |

| $T_{CP}$ | $T_{SEQ}$ | | | $T_{GP}$ | $T_{CP1}$ | |
|---|---|---|---|---|---|---|
| SEQ1 =CP | SEQ2 | SEQ3 | SEQ4 | GP | CP1 | uplink data |

USS

FIG. 11D

| GP | | | | | | |
|---|---|---|---|---|---|---|
| symbol 1 | | symbol 2 | | | symbol 3 | |

| $T_{CP}$ | $T_{SEQ}$ | | | | $T_{GP}$ | |
|---|---|---|---|---|---|---|
| CP | SEQ1 | SEQ2 | SEQ3 | SEQ4 | GP | CP1 | uplink data |

USS

FIG. 11E

| GP | | | | | | |
|---|---|---|---|---|---|---|
| symbol 1 | | symbol 2 | | | symbol 3 | |

| $T_{CP}$ | $T_{SEQ}$ | | | | $T_{GP}$ | $T_{CP1}$ |
|---|---|---|---|---|---|---|
| CP | SEQ1 | SEQ2 | SEQ3 | SEQ4 | GP | CP1 | uplink data |

USS

FIG. 11F

| GP | | | | | | |
|---|---|---|---|---|---|---|
| symbol 1 | | symbol 2 | | | symbol 3 | |

| $T_{CP}$ | | $T_{SEQ}$ | | $T_{GP}$ | | |
|---|---|---|---|---|---|---|
| CP | SEQ1 =CP | SEQ2 | SEQ3 | SEQ4 =GP | CP1 | uplink data |

FIG. 11G

FIG. 11H

FIG. 12

FIG. 13

FIG. 14

| $T_{\text{CP}}$ | $T_{\text{SEQ}}$ | $T_{\text{GP}}$ | $T_{\text{CP1}}$ |
|---|---|---|---|
| CP | SEQ | GP | CP 1 |

preparatory amount + 1 symbol + next symbol CP1

FIG. 15

| $T_{\text{CP}}$ | $T_{\text{SEQ}}$ | $T_{\text{GP}}$ |
|---|---|---|
| CP | SEQ | GP |

2 symbol

FIG. 16

wireless network access apparatus

radius determination module —— 10

first acquisition module —— 20

structure determination module —— 30

second acquisition module —— 40

generating module —— 50

subcarrier mapping module —— 60

truncation module —— 70

adding module —— 80

FIG. 17

## INTERNATIONAL SEARCH REPORT

| International application No. |
| --- |
| **PCT/CN2023/095334** |

**A. CLASSIFICATION OF SUBJECT MATTER**

H04W48/16(2009.01)i; H04W56/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 覆盖, 半径, 标识, 参数, 对应, 工业, 接入, 上行, 同步, 随机接入, 唯一, 循环移位, 映射, coverage, radius, ID, index, according, industry, access, UL, uplink, synchron+, RACH, unique, CP, cyclic, shift

**C. DOCUMENTS CONSIDERED TO BE RELEVANT**

| Category* | Citation of document, with indication, where appropriate, of the relevant passages | Relevant to claim No. |
| --- | --- | --- |
| A | CN 109644416 A (HUAWEI TECHNOLOGIES CO., LTD.) 16 April 2019 (2019-04-16) description, paragraphs [0182]-[0494] | 1-16 |
| A | CN 112788773 A (ZTE CORP.) 11 May 2021 (2021-05-11) entire document | 1-16 |
| A | CN 114095112 A (BEIJING CHANGKUN TECHNOLOGY CO., LTD.) 25 February 2022 (2022-02-25) entire document | 1-16 |
| A | WO 2023018294 A1 (SAMSUNG ELECTRONICS CO., LTD.) 16 February 2023 (2023-02-16) entire document | 1-16 |
| A | CN 114616896 A (QUALCOMM INC.) 10 June 2022 (2022-06-10) entire document | 1-16 |
| A | US 2021120590 A1 (MEDIATEK SINGAPORE PTE LTD.) 22 April 2021 (2021-04-22) entire document | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 September 2023** | **07 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :--- |
| **PCT/CN2023/095334** |

| C. | DOCUMENTS CONSIDERED TO BE RELEVANT | |
| :---: | :--- | :---: |
| Category* | Citation of document, with indication, where appropriate, of the relevant passages | Relevant to claim No. |
| A | WO 2022036566 A1 (GUANGDONG OPPO MOBILE TELECOMMUNICATIONS CORP., LTD.) 24 February 2022 (2022-02-24)<br>entire document | 1-16 |

Form PCT/ISA/210 (second sheet) (July 2022)

## INTERNATIONAL SEARCH REPORT
### Information on patent family members

International application No.

**PCT/CN2023/095334**

| Patent document cited in search report | | | Publication date (day/month/year) | Patent family member(s) | | | Publication date (day/month/year) |
|---|---|---|---|---|---|---|---|
| CN | 109644416 | A | 16 April 2019 | CN | 109644416 | B | 18 May 2021 |
| | | | | WO | 2018018628 | A1 | 01 February 2018 |
| | | | | KR | 20190034258 | A | 01 April 2019 |
| | | | | IN | 201917004728 | A | 05 April 2019 |
| | | | | BR | 112019001706 | A2 | 07 May 2019 |
| | | | | EP | 3484216 | A1 | 15 May 2019 |
| | | | | EP | 3484216 | A4 | 26 June 2019 |
| | | | | US | 2019159153 | A1 | 23 May 2019 |
| | | | | JP | 2019527972 | A | 03 October 2019 |
| CN | 112788773 | A | 11 May 2021 | | None | | |
| CN | 114095112 | A | 25 February 2022 | | None | | |
| WO | 2023018294 | A1 | 16 February 2023 | CN | 115706651 | A | 17 February 2023 |
| CN | 114616896 | A | 10 June 2022 | US | 2021135918 | A1 | 06 May 2021 |
| | | | | WO | 2021087146 | A1 | 06 May 2021 |
| | | | | WO | 2021087146 | A8 | 28 April 2022 |
| | | | | EP | 4052435 | A1 | 07 September 2022 |
| | | | | WO | 2021087146 | A1 | 06 May 2021 |
| | | | | IN | 202227025336 | A | 09 September 2022 |
| US | 2021120590 | A1 | 22 April 2021 | CN | 112688895 | A | 20 April 2021 |
| WO | 2022036566 | A1 | 24 February 2022 | CN | 115868223 | A | 28 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310182538